(19) Europäisches Patentamt
European Patent Office
Office européen des brevets

(11) EP 2 704 414 A2

(12) EUROPEAN PATENT APPLICATION

(43) Date of publication:
05.03.2014 Bulletin 2014/10

(51) Int Cl.:
H04N 1/405 (2006.01)  H04N 1/409 (2006.01)

(21) Application number: 13167192.7

(22) Date of filing: 09.05.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 31.08.2012  KR 20120096423

(71) Applicant: Samsung Electronics Co., Ltd
Gyeonggi-do 443-742 (KR)

(72) Inventor: Hong, Jin-kyung
Seoul (KR)

(74) Representative: Taor, Simon Edward William et al
Venner Shipley LLP
200 Aldersgate
London EC1A 4HD (GB)

(54) **Image forming apparatus and image forming method**

(57)    An image forming apparatus and an image forming method are used to smoothly process an edge area of halftoning-processed binary data. The image forming apparatus may include a communication interface which receives printing data, a binarizer which performs halftoning with respect to the received printing data to generate binary data, an edge processor, and a printing engine which forms an image by using the edge-processed binary data. The edge processor calculates an edge strength of each white pixel of the generated binary data, determines edge candidates, determines whether an edge candidate is an edge, and substitutes a black pixel for a white pixel determined as an edge to perform edge processing with respect to the generated binary data.

FIG. 12

EP 2 704 414 A2

**Description**

The disclosure herein generally relates to an image forming apparatus and an image forming method, and more particularly, to an image forming apparatus and an image forming method for smoothly processing an edge area of halftoning-processed binary data.

An image forming apparatus refers to an apparatus which prints printing data generated by a terminal, such as a computer, on a print paper sheet or other printing medium. Examples of the image forming apparatus may include a copier, a printer, a fax machine, a multifunction peripheral (MFP) which complexly realizes functions of two or more devices (e.g., the copier, printer, or fax machine) through one device, and the like.

There is an edge enhancement as a main processing method for enhancing an image in an image forming apparatus. Since binary data has a non-uniform boundary interface in contrast with contone data, the binary data requires an edge enhancement for relatively smoothly processing an edge area.

A conventional image forming apparatus performs an edge enhancement with reference to contone data and attribute tag information allocated to each pixel or designates a template of a preset particular text pattern to perform the edge enhancement with respect to only the particular text pattern matching with the template.

A conventional edge enhancement is performed on a binary basis but is consistent and refers to contone data and attribute tag information to provide a stable image quality. However, this additional resource allocation lays a burden on a low-priced or high-speed image forming apparatus.

Also, according to a conventional method of performing an edge enhancement with respect to only a particular text pattern, an edge enhancement is not performed with respect to data having an undesignated pattern.

Additional aspects and/or advantages will be set forth in part in the description which follows and, in part, will be apparent from the description, or may be learned by practice of the invention.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide an image forming apparatus and an image forming method for performing an edge enhancement based on a characteristic of binary data.

According to an aspect of the exemplary embodiments, there is provided an image forming apparatus including: a communication interface which receives printing data; a binarizer which performs halftoning with respect to the received printing data to generate binary data; an edge processor which calculates an edge strength of each white pixel of the generated binary data to determine whether each white pixel is an edge candidate, determines whether the edge candidate is an edge, by using a pixel value adjacent to the edge candidate, and substitutes a black pixel for a white pixel determined as an edge to perform edge processing with respect to the generated binary data; and a printing engine which forms an image by using the edge-processed binary data.

The edge processor may include: a pixel detector which detects whether each pixel of the binary data is a white pixel; an edge candidate determiner which calculates an edge strength of the detected white pixel to determine whether the detected white pixel is an edge candidate; an edge determiner which determines whether the determined edge candidate is an edge, based on a pixel value adjacent to the edge candidate; and a substituter which substitutes a black pixel for the white pixel determined as the edge.

The edge candidate determiner may extract a preset pixel area based on the white pixel and calculate an edge strength by using coordinate values of each black pixel and each white pixel of the extracted pixel area.

The edge candidate determiner may calculate the edge strength by using the Equation below:

$$E = \left| \left( \sum BP_i \right) * N_w - \left( \sum WP_i \right) * N_b \right| + \left| \left( \sum BP_j \right) * N_w - \left( \sum WP_j \right) * N_b \right|$$

wherein $BP_i$ denotes a coordinate value of an i axis of a black pixel, $BP_j$ denotes a coordinate value of a j axis of the black pixel, $WP_i$ denotes a coordinate value of an i axis of a white pixel, $WP_j$ denotes a coordinate value of a j axis of the white pixel, $N_b$ denotes the number of black pixels, $N_w$ denotes the number of white pixels, and E denotes the edge strength.

If the calculated edge strength is greater than 0, the edge candidate determiner may determine the white pixel as an edge candidate.

The edge determiner may extract four pixels areas having preset sizes in top, bottom, left, and right directions based on the white pixel, determine whether the four pixel areas have black pixels, and, if the three pixel areas have black pixels, determine the white pixel as an edge.

The edge determiner may extract preset first and second areas based on one of the extracted four pixel areas having no black pixel and, if a distance between the white pixel and each black pixel farthest away from the white pixel in the first and second areas is smaller than or equal to a threshold value, determine the white pixel as an edge.

The edge determiner may perform the edge determination by using the Equation below:

$$F = (|C_i - A_i| + |C_j - A_j| \leq D) \,\&\,\&(|C_i - B_i| + |C_j - B_j| \leq D)$$

wherein $A_i$ denotes an i axis coordinate of a black pixel (an anchor position) extracted in a first area, $A_j$ denotes a j axis coordinate of the black pixel (the anchor position) extracted in the first area, $B_i$ denotes an i axis coordinate of a black pixel (an anchor position) extracted in a second area, $B_j$ denotes a j axis coordinate of the black pixel (the anchor position) extracted in the second area, $C_i$ denotes an i axis coordinate of a white pixel, $C_j$ denotes a j axis coordinate of the white pixel, D denotes a distance threshold value between the pixel and a black pixel extracted in each area, and F is 0 or 1 (if F=1, the white pixel is determined as the edge).

According to another aspect of the exemplary embodiments, there is provided an image forming method including: receiving printing data; performing halftoning with respect to the received printing data to generate binary data; calculating an edge strength of each white pixel of the generated binary data to determine whether each white pixel is an edge candidate, determining whether the edge candidate is an edge, by using a pixel value adjacent to the edge candidate, and substituting a black pixel for a white pixel determined as an edge to perform edge processing with respect to the generated binary data; and forming an image by using the edge-processed binary data.

The performance of the edge processing may include: detecting whether each pixel of the binary data is a white pixel; calculating an edge strength of the detected white pixel to determine whether the detected white pixel is an edge candidate; determining whether the determined edge candidate is an edge, based on a pixel value adjacent to the edge candidate; and substituting a black pixel for the white pixel determined as the edge.

The determination of whether the detected white pixel is the edge candidate may include: extracting a preset pixel area based on the white pixel and calculating an edge strength by using coordinate values of each black pixel and each white pixel of the extracted pixel area.

The edge strength may be calculated by using the Equation below:

$$E = \left| (\sum BP_i) * N_w - (\sum WP_i) * N_b \right| + \left| (\sum BP_j) * N_w - (\sum WP_j) * N_b \right|$$

wherein $BP_i$ denotes a coordinate value of an i axis of a black pixel, $BP_j$ denotes a coordinate value of a j axis of the black pixel, $WP_i$ denotes a coordinate value of an i axis of a white pixel, $WP_j$ denotes a coordinate value of a j axis of the white pixel, $N_b$ denotes the number of black pixels, $N_w$ denotes the number of white pixels, and E denotes the edge strength.

If the calculated edge strength is greater than 0, the white pixel may be determined as an edge candidate.

Four pixels areas having preset sizes may be extracted in top, bottom, left, and right directions based on the white pixel, whether the four pixel areas have black pixels may be determined, and, if the three pixel areas have black pixels, the white pixel may be determined as an edge.

Preset first and second areas may be extracted based on one of the extracted four pixel areas having no black pixel and, if a distance between the white pixel and each black pixel farthest away from the white pixel in the first and second areas is smaller than or equal to a threshold value, the white pixel may be determined as an edge.

The edge determination may be performed by using the Equation below:

$$F = (|C_i - A_i| + |C_j - A_j| \leq D) \,\&\,\&(|C_i - B_i| + |C_j - B_j| \leq D)$$

wherein $A_i$ denotes an i axis coordinate of a black pixel (an anchor position) extracted in a first area, $A_j$ denotes a j axis coordinate of a black pixel (the anchor position) extracted in the first area, $B_i$ denotes an i axis coordinate of a black pixel (an anchor position) extracted in a second area, $B_j$ denotes a j axis coordinate of the black pixel (the anchor position) extracted in the second area, $C_i$ denotes an i axis coordinate of a white pixel, $C_j$ denotes a j axis pixel of the white pixel, D denotes a distance threshold value corresponding to a distance between the white pixel and a black pixel extracted in each area, and F is 0 or 1 (if F=1, the white pixel is determined as the edge).

According to another aspect of the exemplary embodiments, there is provided a computer-readable recording medium including a program for executing the image forming method.

According to another aspect of the exemplary embodiments an edge processing method may include receiving, by an edge processor, binary data generated by a halftoning process, the binary data corresponding to a plurality of pixels, detecting white pixels from among the plurality of pixels based on the binary data, determining a white pixel as an edge candidate pixel when an edge strength of the white pixel is greater than a predetermined threshold value, determining the edge candidate pixel as an edge by using a pixel value adjacent to the edge candidate, and substituting a black pixel for the white pixel determined as an edge. The edge strength of the white pixel may be determined by extracting a pixel area about the white pixel, and using coordinate values of black pixels and white pixels from the extracted pixel area with respect to the white pixel. The edge candidate may be determined by extracting pixel areas in a plurality of directions about the edge candidate pixel and determining whether the pixel areas include at least one black pixel. If a predetermined number of pixel areas include at least one black pixel, the method may further include extracting first and second areas based on a pixel area having only white pixels to determine anchor positions corresponding to the first and second areas, calculating a boundary distance based on distances between respective anchor positions and the edge candidate pixel, and determining the edge candidate pixel as an edge if the boundary distance is less than or equal to a preset threshold value. The substituting the black pixel for the white pixel may further include adjusting a strength of brightness of the substituted black pixel based on the edge strength, or according to a distribution of black pixels adjacent to the white pixel determined as an edge.

The above and/or other aspects will be more apparent by describing certain exemplary embodiments with reference to the accompanying drawings, in which:

FIG. 1 is a block diagram illustrating a structure of an image forming apparatus according to an exemplary embodiment of the present general inventive concept;
FIG. 2 is a block diagram illustrating a structure of an edge processor according to an exemplary embodiment of the present general inventive concept;
FIG. 3, parts (a) and (b), are views illustrating a process of calculating an edge strength according to an exemplary embodiment of the present general inventive concept;
FIG. 4 is a view illustrating an operation of detecting positions of adjacent pixels to determine an edge according to an exemplary embodiment of the present general inventive concept;
FIGS. 5 and 6 are views illustrating an operation of detecting anchor positions to determine an edge according to an exemplary embodiment of the present general inventive concept;
FIG. 7 is a view illustrating a calculation for determining an edge according to an exemplary embodiment of the present general inventive concept;
FIGS. 8 through 10 are views illustrating effects of edge processing according to an exemplary embodiment of the present general inventive concept;
FIG. 11 is a flowchart illustrating an image forming method according to an exemplary embodiment of the present general inventive concept; and
FIG. 12 is a flowchart illustrating an edge processing method according to an exemplary embodiment of the present general inventive concept.

Exemplary embodiments are described in greater detail with reference to the accompanying drawings.

In the following description, the same drawing reference numerals are used for the same elements even in different drawings. The matters described in the disclosure, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

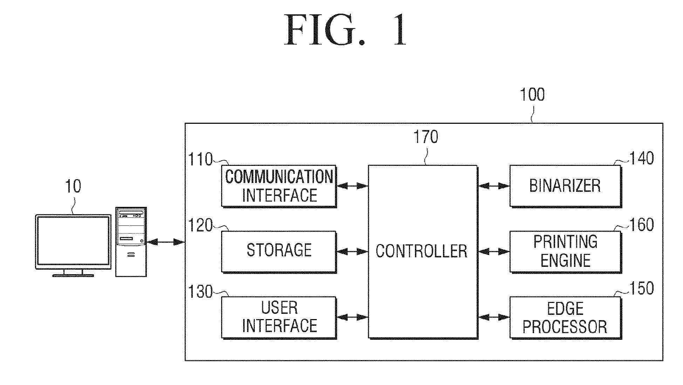

FIG. 1 is a block diagram illustrating a structure of an image forming apparatus 100 according to an exemplary embodiment of the present general inventive concept. Referring to FIG. 1, the image forming apparatus 100 includes a communication interface 110, a storage 120, a user interface 130, a binarizer 140, an edge processor 150, a printing engine 160, and a controller 170.

The communication interface 110 may be formed to connect the image forming apparatus 100 to a print controlling terminal 10 through a wired or wireless network. For example, the image forming apparatus 100 may be connected to a print controlling terminal 10 through a local area network (LAN), the Internet, or a universal serial bus (USB) port. The communication interface 110 receives printing data from the print controlling terminal 10. Here, the received printing data may be data having a resolution of, for example, 1200 x 1200 dpi, vector data, or contone data.

The storage 120 storages printing data. In detail the storage 120 stores the printing data received through the communication interface 110. The storage 120 stores data (e.g., bitmap data, binary data, multi-bit data, or the like) processed by the binarizer 140 and the edge processor 150 which will be described later. The storage 120 may be realized as a storage medium of the image forming apparatus 100 or an external storage medium, e.g. a removable disk having a USB memory, a web server through a network, or the like. Only one storage 120 is illustrated and described in the present exemplary embodiment, but the storage 120 may be divided into a memory for storing data and a memory for processing a command. The storage 120 may further be embodied as a non-transitory computer readable medium, including hard disks, floppy disks, flash memory or memory cards (e.g., a USB drive), a ROM, a blue-ray disk, or optical media such as CD ROM discs and DVDs.

The user interface 130 includes a plurality of functional keys through which a user sets or selects various types of functions supported by the image forming apparatus 100 and displays various types of information provided by the image forming apparatus 130. A monitor and a mouse may be combined to realize the user interface 130 or the user interface 130 may be realized as a device which simultaneously realizes an input and an output like a touch pad or the like.

The binarizer 140 performs halftoning with respect to the printing data to generate binary data. In detail, the binarizer 140 renders the printing data into a bitmap image and performs halftoning such as screening, dithering, or the like, with respect to the bitmap image to generate the binary data. Here, the generated binary data may be temporarily stored in the storage 120.

Halftoning may refer to a technique for displaying brightness of an image with minute dots, i.e., a technique for changing sizes of dots or patterns to display brightness in the image forming apparatus 100 capable of displaying white and black colors. In other words, the halftoning is equal to a principle of forming a picture put on a newspaper. That is, halftoning may be performed using only two colors (e.g., black and white) where an image may be printed with only one color using dots of different sizes and by using various patterns.

The binarizer 140 renders the printing data to generate the bitmap image in the present exemplary embodiment but is not limited thereto. Therefore, the binarizer 140 may additionally include a renderer to performing rendering.

Here, the binary data may refer to a data structure to which 1 bit information is allocated per 1 pixel. For example, black pixels may be defined by the value 1, and white pixels may be defined by the value 0.

The edge processor 150 determines whether each white pixel of the generated binary data is an edge and performs edge processing with respect to the white pixel which has been determined as the edge. In detail, the edge processor 150 calculates an edge strength of each white pixel of the generated binary data to determine whether each white pixel is an edge candidate. For example, the edge processor 150 may determine that a white pixel corresponds to an edge if a value corresponding to the edge strength exceeds a threshold value. The edge processor 150 determines whether the determined edge candidate is an edge, by using a pixel value adjacent to the edge candidate to substitute a black pixel for the white pixel determined as the edge.

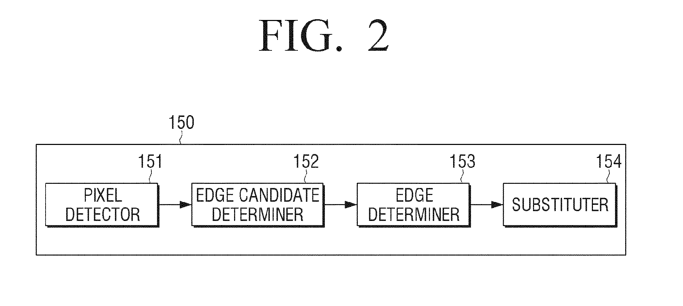

A detailed operation of the edge processor 150 will be described later with reference to FIG. 2.

The printing engine 160 forms an image by using the edge-processed binary data. In detail, the printing engine 160 generates a plurality of dots corresponding to the binary data processed by the edge processor 150 and sticks or applies toner onto the dots to form the image on a printing medium. The printing medium used by the image forming apparatus 100 may include printing paper sheets such as glossy paper, plain paper, art paper, overhead projector film, and the like.

The controller 170 controls elements of the image forming apparatus 100. In detail, if the printing data is received from the print controlling terminal 10, the controller 170 controls the storage 120 to temporarily store the printing data.

The controller 170 controls the binarizer 140, the edge processor 150, and the print engine 160 to perform halftoning with respect to the printing data stored in the storage 120 in order to generate the binary data and to perform an edge enhancement with respect to the binary data in order to print the binary data.

FIG. 2 is a block diagram illustrating a structure of the edge processor 150 according to an exemplary embodiment of the present general inventive concept.

Referring to FIG. 2, the edge processor 150 includes a pixel detector 151, an edge candidate determiner 152, an edge determiner 153, and a substituter 154.

The pixel detector 151 detects whether each pixel of the binary data is a white pixel. In detail, since a black pixel of the binary data is not an object which is to be edge-processed, the pixel detector 151 determines whether a pixel is a white pixel to detect the white pixel except the black pixel. If the pixel is the black pixel, the pixel is not the object which is to be edge-processed. Therefore, the pixel detector 151 bypasses the black pixel. If the pixel is the white pixel, the pixel detector 151 hands the white pixel over to the edge candidate determiner 152.

The edge candidate determiner 152 calculates an edge strength of the detected white pixel to determine whether the detected white pixel is an edge candidate. In detail, if the pixel detector 151 determines the pixel as the white pixel, the edge candidate determiner 152 calculates an edge strength and, if the edge strength is more than or equal to 0, determines the white pixel as an edge candidate. Alternatively, if the edge strength is determined to be equal to 0 the edge candidate determiner 152 may not determine the white pixel as an edge candidate, but determines the white pixel as an edge candidate only if the edge strength is greater than 0.

The edge candidate determiner 152 extracts a preset pixel area based on a white pixel which is an object which is to be edge-processed and calculates an edge strength by using a distance between each black pixel of the extracted pixel area and the white pixel to be edge-processed. Here, by way of example, a pixel area having a size of 11 * or 9 * 9 may be used as the preset pixel area.

Since black and white pixels are separated from each other in the edge candidate area, i.e. a boundary area, the edge candidate area has a great distance value. Since black and white pixels are spread in a halftone area of an image, the halftone area has a small distance value.

The edge strength may be calculated as in Equation 1 below:

$$ E = \left| \left( \sum BP_i \right) * N_w - \left( \sum WP_i \right) * N_b \right| + \left| \left( \sum BP_j \right) * N_w - \left( \sum WP_j \right) * N_b \right| \qquad ...(1) $$

wherein $BP_i$ denotes a coordinate value of an i axis of a black pixel, $BP_j$ denotes a coordinate value of a j axis of the black pixel, $WP_i$ denotes a coordinate value of an i axis of a white pixel, $WP_j$ denotes a coordinate value of a j axis of the white pixel, $N_b$ denotes the number of black pixels, $N_w$ denotes the number of white pixels, and E denotes the edge strength.

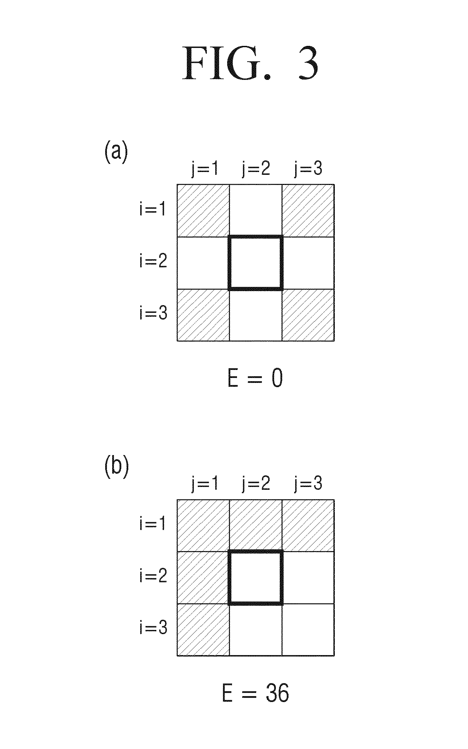

For example, referring to FIG. 3 parts (a) and (b), pixel areas (having a size of 3 * 3) are extracted based on a white pixel which is to be edge-processed.

In FIG. 3 part (a), if an edge strength is calculated in the pixel area by using Equation 1 above, a result of E=0 is calculated. The pixel area of FIG. 3 part (a) corresponds to a halftone area of an image in which black and white pixels are uniformly spread. Therefore, a white pixel which is positioned in a center of the pixel area and is an object to be edge-processed may not be determined as an edge candidate area.

If an edge strength is calculated in the pixel area of FIG. 3 part (b) by using Equation 1 above, a result of E=36 is calculated. Since black and white pixels are separated from each other in the pixel area of FIG. 3 part (b), the pixel area may be regarded as a boundary area. Therefore, a white pixel which is positioned in a center of the pixel area and is an object to be edge-processed may be determined as an edge candidate area.

The operation of the edge candidate determiner 152 has been described above. The edge strength calculated by the edge candidate determiner 152 may be used to support edge processing of an image forming apparatus which supports multi-bit data besides binary data in the substituter 154. The detailed contents will be described later along with the substituter 154.

The edge determiner 153 determines whether the determined edge candidate is an edge, based on a pixel value adjacent to the edge candidate. In detail, the edge determiner 153 according to the present exemplary embodiment may include a determination process including at least two operations.

A first operation may be to search for a dot position direction to determine whether the dot position direction satisfies a preset condition.

A plurality of pixel areas having preset sizes may be extracted in different directions with respect to a white pixel which corresponds to an object to be edge-processed. For example, four pixel areas having preset sizes may be extracted in top, bottom, right, and left directions based on a white pixel which is an object to be edge-processed, and a determination may be made as to whether the four pixel areas have black pixels. If three pixel areas (e.g., in three directions) have black pixels, a white pixel may be determined as an edge.

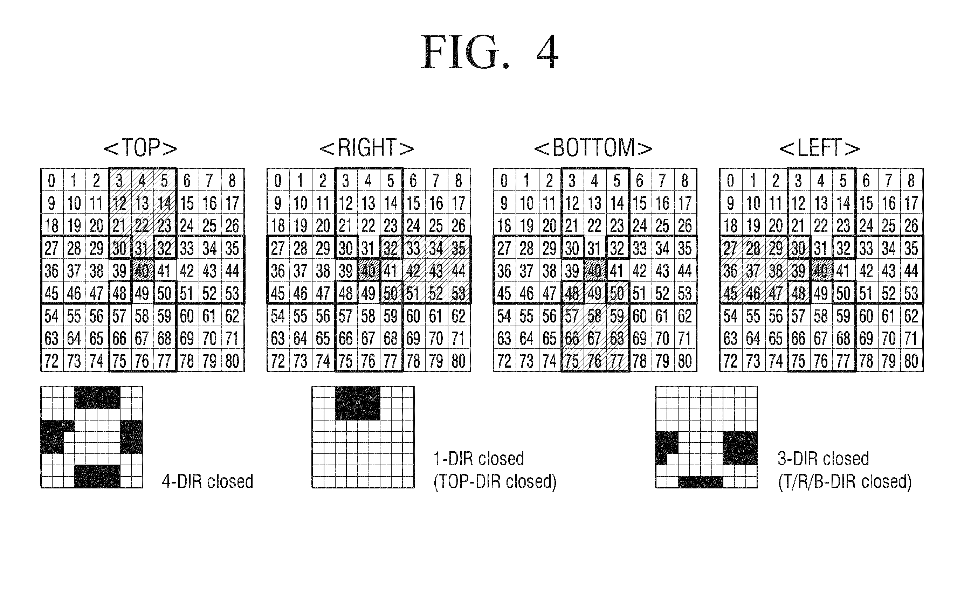

For example, referring to FIG. 4, a pixel area is extracted from an area having a size of 9 * 9. Here, the fortieth pixel refers to a white pixel which is an object to be edge-processed. Four pixel areas having sizes of 4 * 3 are extracted in top, bottom, right, and left directions based on the fortieth pixel to check whether the four pixel areas have at least one or more black pixels. If each of the four pixel areas has at least one or more black pixels, the corresponding pixel area is determined as being closed. Here, if three of the four pixel areas are closed, the three pixel areas are determined as outsides of the object. If all of the four pixel areas are closed, the four pixel areas are determined as insides of the object. If one of the four pixel areas is closed, the one pixel area is determined as being gotten out of an outside area of the object.

In a second operation, if based on the first operation it is determined that three pixel areas have black pixels (i.e., the three areas are closed), anchor positions are searched, and a boundary distance may be calculated. A boundary distance may refer to a distance with respect to a white pixel as an object to be edge-processed. The boundary distance may be calculated to determine the three areas as edges if the boundary distance is smaller than or equal to a preset threshold value.

In the search for the anchor positions, preset first and second areas are extracted based on one of the four pixel areas having no black pixel in the first step, and black pixels farthest away from a white pixel as an object to be edge-processed in the first and second areas are selected as the anchor positions.

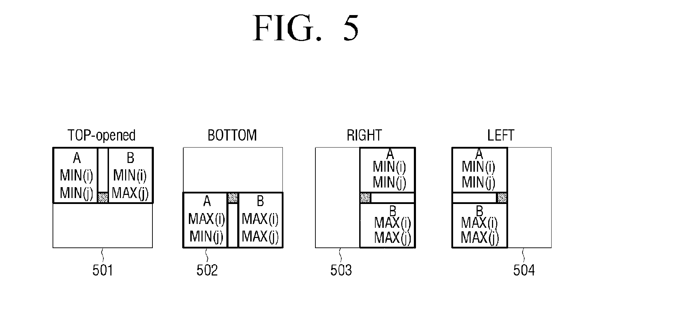

Referring to FIG. 5, as an example of calculating anchor positions, areas A and B are extracted as first and second areas based on one of the four pixel areas determined in the first operation as having no black pixel.

If a pixel area in a top direction has no black pixel (i.e. the top area is opened), an anchor position of the area A is calculated as Min(i), Min(j), and an anchor position of the area B is calculated as Min(i), Max(j) (501).

If a pixel area in a bottom direction has no black pixel (the bottom direction is opened), the anchor position of the area A is calculated as Max(i), Min(j), and the anchor positions of the area B is calculated as Max(i), Max(j) (502).

If a pixel area in a right direction has no black pixel (the right direction is opened), the anchor position of the area A is calculated as Min(i), Max(j), and the anchor position of the area B is calculated as Max(i), Max(j) (503).

If a pixel area in a left direction has no black pixel, the anchor position of the area A is calculated as Min(i) Min (j), and the anchor position of the area B is calculated as Max(i), Max(j) (504).

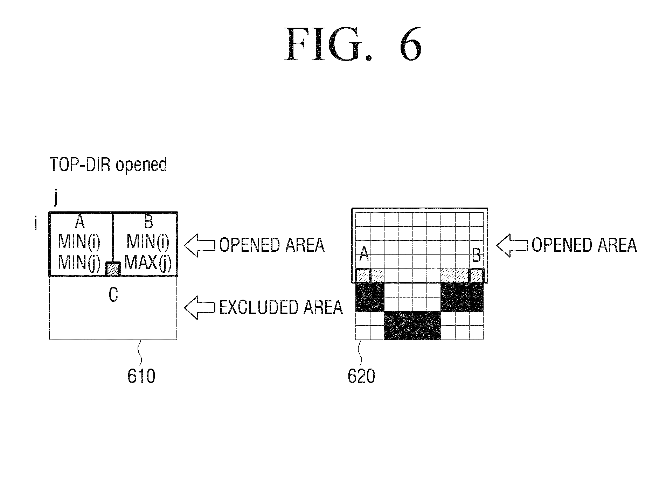

Referring to FIG. 6, if a pixel area in a top direction has no black pixel (i.e., the top direction is opened), areas A and B are extracted based on an opened area (610). Pixel A(4,0) corresponding to Min(i), Min(j) is selected as an anchor position of the area A, and pixel B(4,8) corresponding to Min(i), Max(j) is selected as an anchor position of the area B.

If the anchor positions are searched as described above, a boundary distance may then be calculated. If the boundary distance is smaller than or equal to a preset threshold value, the areas A and B may be determined as effective edge pixels. In other words, if a distance between a white pixel as an object to be edge-processed and anchor positions of first and second areas is smaller than or equal to a threshold value, the white pixel may be determined as an effective edge pixel. If the distance exceeds the threshold value, a pixel may be positioned between letters outside the object, in particular, a text, and the pixel may be bypassed. For example, if a whole size of an area from which four pixel areas are extracted is of size 9*9, a preset threshold value may be set to 5. If the whole size of the area is of size 11*11, the preset threshold value may be set to 6. The preset threshold value may be stored in the storage and may be in the form of a lookup table. For example, preset threshold values may correspond to particular sizes of areas from which pixel areas are extracted.

A valid edge pixel which is a white pixel as an object to be edge-processed may be calculated by using the boundary distance through Equation 2 below:

$$F = (\left|C_i - A_i\right| + \left|C_j - A_j\right| \leq D) \;\&\&\; (\left|C_i - B_i\right| + \left|C_j - B_j\right| \leq D) \qquad ...(2)$$

wherein $A_i$ denotes an i axis coordinate of a black pixel (an anchor position) extracted in a first area, $A_j$ denotes a j axis coordinate of the black pixel (the anchor position) extracted in the first area, $B_i$ denotes an i axis coordinate of a black pixel (an anchor position) extracted in a second area, $B_j$ denotes a j axis coordinate of the black pixel (the anchor position) extracted in the second area, $C_i$ denotes an i axis coordinate of a white pixel, $C_j$ denotes a j axis pixel of the white pixel, and D denotes a distance threshold value which may be compared with a distance calculated between the white pixel and a black pixel extracted in each of the first and second areas. If F calculated in

Equation 2 above is 1, the white pixel which is the object to be edge-processed may be determined as an edge. That is, F may be equal to 0 or 1 (i.e., true or false). If F is equal to 1, the white pixel is determined as the edge, and if F is equal to 0, then the white pixel is determined not to be the edge.

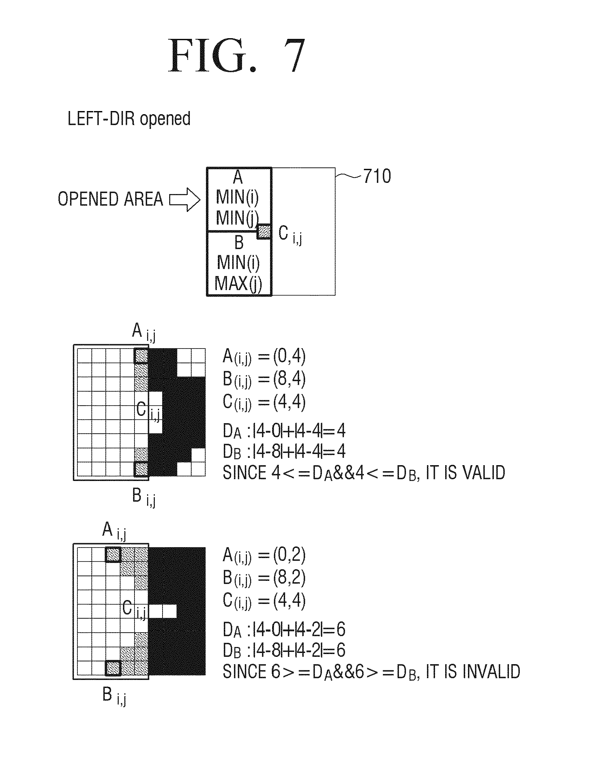

An example of determining whether a white pixel is an edge, by using Equation 2 above will now be described with reference to FIG. 7. If a pixel area in a left direction has no black pixel (i.e., the left direction is opened), areas A and B are extracted based on an opened area (710). C(i,j)=(4,4) refers to a white pixel which is an object to be edge-processed. Since an anchor position of the area A is calculated as A(i,j)=(0,4), an anchor position of the area B is calculated as B(i,j)=(8,4), and a size of a whole area corresponds to 9 * 9, a threshold D is preset to 5. If this is substituted into Equation 2 above, a distance between anchor position A(0,4) of areas C and A and anchor position B(8,4) of the area B is smaller than a threshold value. Therefore, the areas A and B are determined as edges (720). That is, the white pixel which is the object to be edge-processed may be determined as an edge.

If the anchor position of the area A is calculated as A(i,j)=(0,2), and the anchor position of the area B is calculated as B(i,j)=(8,2) (720), and this is substituted into Equation 2 above, a distance between the anchor position A(0,2) of the areas C and A and the anchor position B(8,2) of the area B is greater than the threshold value. Therefore, the areas A and B are not determined as edges. That is, the white pixel which is the object to be edge-processed may not be determined as an edge and may be bypassed.

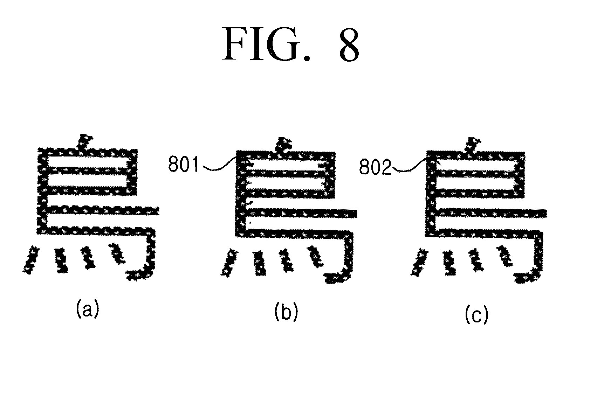

An effect of the above processes involving the above-described operations, i.e., a process of searching for anchor positions to calculate a boundary distance and comparing the boundary distance with a threshold value, will be described with reference to FIG. 8 parts (a) through (c).

Referring to FIG. 8 part (a), binary data is not edge-processed.

Referring to FIG. 8 part (b), a dot position direction corresponding to the first operation is searched to determine whether three pixel areas have black pixels in order to determine the three pixels areas as edges if the three pixel areas have the black pixels. In this case, a boundary corresponding to an edge is smoothed. However, even if a pixel is positioned between letters outside a letter, edge-processing may be performed (801).

Referring to FIG. 8 part (c), an anchor position determined in the second operation is searched to calculate a boundary distance and compare the boundary distance with a threshold value. If the boundary distance is smaller than a threshold value, the anchor position is determined as an edge. In this case, edge-processing is not performed with respect to a pixel positioned between letters outside a letter to improve an accuracy of edge-processing.

As described above, the edge determiner 153 according to the present exemplary embodiment may determine whether a white pixel of binary data is an edge.

The substituter 154 substitutes a black pixel for the white pixel which has been determined as the edge. In detail, the edge determiner 154 substitutes the black pixel for the white pixel determined as the edge by the edge determiner 153 to smooth the edge.

If the image forming apparatus 100 supports multi-data besides the binary data, the substituter 154 may adjust a strength of brightness of the substituted black pixel. Pixels of the multi-data support multi-bit such as 1 bit, 2 bit, 4 bit, 8 bit, etc. to select a brightness of black pixels. The substituter 154 may adjust a strength of brightness of black pixels substituted according to a distribution degree of adjacent black pixels in order to support multi-bit even in edge processing.

In detail, the distribution degree of the adjacent black pixels may be determined by using the edge strength calculated by the edge candidate determiner 152. For example, if a size of a pixel area extracted by the edge candidate determiner 152 is of size 9 * 9, a maximum value of an edge strength is E=9720. If multi-bit of 8 bit is supported, brightness strengths of black pixels between 1 and 255 (0 is a white pixel) may be selected. In this case, an edge strength between 1 and 9720 is scaled according to a selectable brightness strength of a black pixel between 1 and 255. Therefore, a brightness strength of a selected black pixel may be applied to substitute the black pixel for a white pixel.

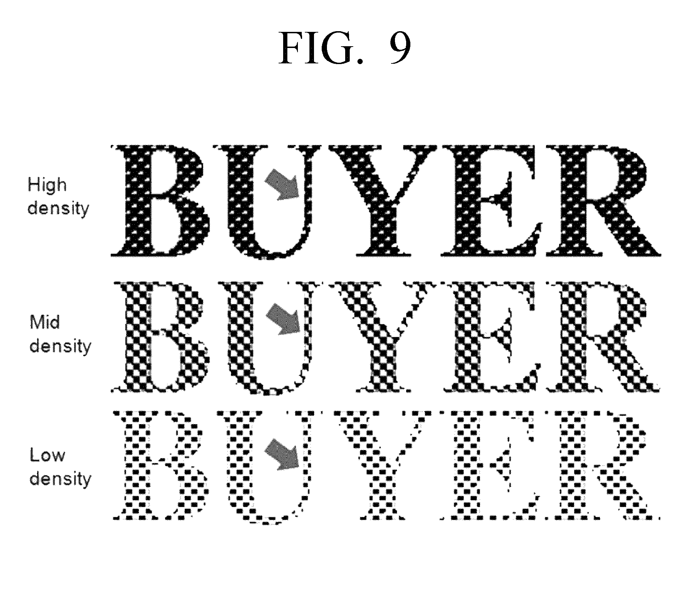

A result obtained by performing edge processing with respect to multi-data having respectively different densities will now be described with reference to FIG. 9. Referring to FIG. 9, a brightness strength of a black pixel which have been edge-processed and substituted may be adjusted according to a distribution of black pixels adjacent to an edge area.

As described above, the edge processor 150 according to the present exemplary embodiment may perform edge processing based on a characteristic of halftoning-processed binary data without referring to contone data and additional attribute tab information.

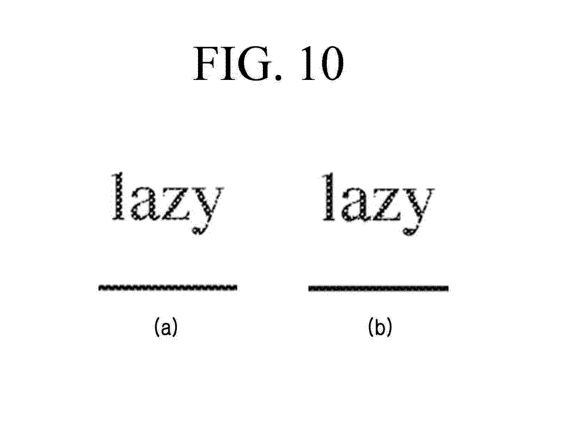

FIG. 10, parts (a) and (b) are views illustrating an effect of edge processing according to an exemplary embodiment of the present general inventive concept.

Referring to FIG. 10 part (a), binary data which has not been edge-processed is printed. Referring to FIG. 10 part (b), binary data which has been edge-processed is printed. In a comparison between the binary data shown in FIG. 10 part (a) and FIG. 10 part (b), edges of a text and a line are smoothed.

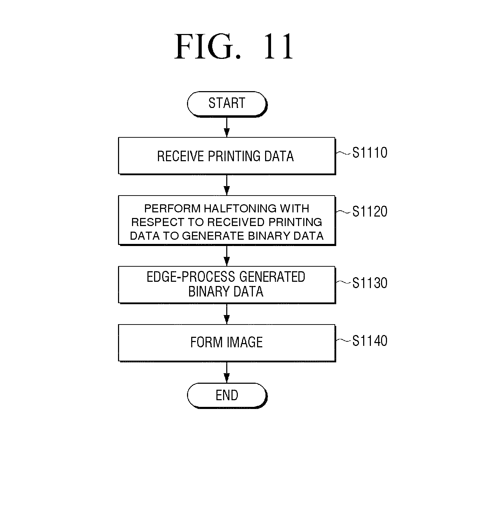

FIG. 11 is a flowchart illustrating an image forming method according to an exemplary embodiment of the present general inventive concept.

Referring to FIG. 11, in operation S1110, the image forming apparatus 100 receives printing data from the print controlling terminal 10. In operation S1120, the image forming apparatus 100 performs halftoning with respect to the received printing data to generate binary data.

In operation S1130, the image forming apparatus 100 performs edge processing with respect to the generated binary data. In detail, the image forming apparatus 100 may calculate an edge strength of each white pixel of the generated binary data to determine whether each white pixel is an edge candidate, determine whether the determined edge candidate is an edge, by using a pixel value adjacent to the determined edge candidate, and substitute a black pixel for the white pixel determined as the edge to perform edge processing with respect to the generated binary data.

In operation S1140, the image forming apparatus 100 forms an image by using the edge-processed binary data.

The image forming method of FIG. 11 may be performed by the image forming apparatus 100 having the structure of FIG. 1 or by image forming apparatuses having other structures.

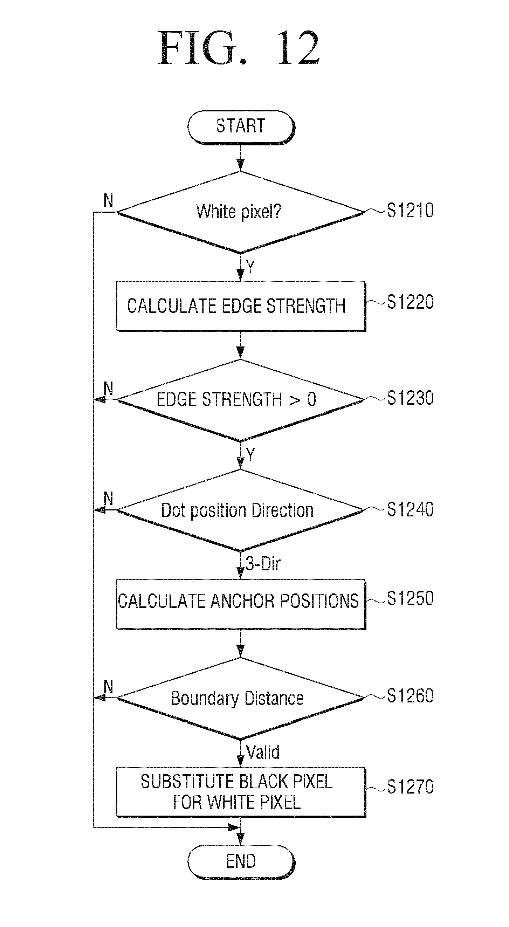

FIG. 12 is a flowchart illustrating an edge processing method according to an exemplary embodiment of the present general inventive concept.

Referring to FIG. 12, in operation S1210, a determination is made as to whether each pixel of halftoning-processed binary data is a white pixel. If it is determined in operation S1210 that a pixel is not the white pixel, the non-white pixel is not an object to be edge-processed and thus is bypassed. If it is determined in operation S1210 that the pixel is the white pixel, the process proceeds to a next operation.

In operation S1220, an edge strength of the detected white pixel is calculated. In operation S1230, a determination is made as to whether the detected white pixel is an edge candidate, by using the edge strength. Here, if the edge strength is greater than 0, the white pixel is determined as the edge candidate in operation S1230. If the edge strength is 0, the white pixel is bypassed in operation S1230.

In an operation of determining whether the white pixel is the edge candidate, a preset pixel area is extracted based on the white pixel, and an edge strength is calculated with reference to black and white pixels of the extracted pixel area. Here, the edge strength may be calculated by using Equation 1 described above.

A determination may be made as to whether the determined edge candidate is an edge, by using a coordinate value of one or more pixels adjacent to the edge candidate.

In operation S1240, a dot position direction is calculated. In detail, a plurality of pixel areas having preset sizes may be extracted in different directions with respect to a white pixel. For example, four pixel areas having preset sizes may be extracted in top, bottom, left, and right directions based on a white pixel, and a determination may be made as to whether the four pixel areas have black pixels. If it is determined in operation S1240 that the four pixel areas have the black pixels, the white pixel may be determined as an edge.

In operation S1250, anchor positions are calculated. In operation S1260, a boundary distance may be calculated to determine whether the white pixel is a valid edge. In detail, preset first and second areas may be extracted based on one of the four pixel areas determined in the first operation as having no black pixel and a determination may be made as to whether a distance (a boundary distance) between a white pixel and a black pixel (an anchor pixel) farthest away from the white pixel in the first and second areas is smaller than or equal to a threshold value. The calculated boundary distance may be used to determine the white pixel as an edge if the distance is smaller than or equal to the threshold value. Here, the edge determination may be performed by using Equation 2 described above.

In operation S1270, a black pixel may be substituted for the white pixel determined as the edge.

If the image forming apparatus 100 supports multi-bit data besides binary data, a strength of brightness of the substituted black pixel may be adjusted by using the edge strength.

The edge processing method of FIG. 12 may be performed by the image forming apparatus 100 having the structure of FIG. 1 or image forming apparatuses having other structures.

As described above, according to the various exemplary embodiments of the present general inventive concept, the image forming apparatus 100 may perform edge processing based on a characteristic of halftoning-processed binary data without referring to contone data and additional attribute tag information.

Also, a clear output image may be provided in a low-priced printer, a high-speed printer, or a mobile printing environment which performs edge processing with limited memory resources.
Methods according to the various exemplary embodiments may be programmed and stored on various types of storage media. Therefore, the methods may be realized in various types of electronic devices which execute the storage media.

The components constituting the image forming apparatus and corresponding methods for controlling the image forming apparatus according to the above-described example embodiments, may use one or more processors, which may include a microprocessor, central processing unit (CPU), digital signal processor (DSP), or application-specific integrated circuit (ASIC), as well as portions or combinations of these and other processing devices.

Also, the above-described image forming method may be realized as a program including a computer-executable algorithm. The program may be stored and provided on a non-transitory computer readable medium.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. An image forming apparatus comprising:

    a communication interface arranged to receive printing data;
    a binarizer arranged to perform halftoning with respect to the received printing data to generate binary data;
    an edge processor arranged to calculate an edge strength of each white pixel of the generated binary data to determine whether each white pixel is an edge candidate, to determine whether the edge candidate is an edge, by using a pixel value adjacent to the edge candidate, and to substitute a black pixel for a white pixel determined as an edge to perform edge processing with respect to the generated binary data; and
a printing engine arranged to form an image by using the edge-processed binary data.

2. The image forming apparatus of claim 1, wherein the edge processor comprises:

a pixel detector arranged to detect whether each pixel of the binary data is a white pixel;
an edge candidate determiner arranged to calculate an edge strength of a detected white pixel to determine whether the detected white pixel is an edge candidate;
an edge determiner arranged to determine whether the determined edge candidate is an edge, based on a pixel value adjacent to the edge candidate; and
a substituter arranged to substitute a black pixel for the white pixel determined as the edge.

3. The image forming apparatus of claim 2, wherein the edge candidate determiner is arranged to extract a preset pixel area based on the white pixel and to calculate an edge strength by using coordinate values of each black pixel and each white pixel of the extracted pixel area.

4. The image forming apparatus of claim 3, wherein the edge candidate determiner is arranged to calculate the edge strength by using the Equation below:

$$E = \left| (\sum BP_i) * N_w - (\sum WP_i) * N_b \right| + \left| (\sum BP_j) * N_w - (\sum WP_j) * N_b \right|$$

wherein $BP_i$ denotes a coordinate value of an i axis of a black pixel, $BP_j$ denotes a coordinate value of a j axis of the black pixel, $WP_i$ denotes a coordinate value of an i axis of a white pixel, $WP_j$ denotes a coordinate value of a j axis of the white pixel, $N_b$ denotes the number of black pixels, $N_w$ denotes the number of white pixels, and E denotes the edge strength.

5. The image forming apparatus of claim 4, wherein if the calculated edge strength is greater than 0, the edge candidate determiner is arranged to determine the white pixel as an edge candidate.

6. The image forming apparatus of any one of claims 2 to 5, wherein the edge determiner is arranged to extract four pixels areas having preset sizes in top, bottom, left, and right directions based on the white pixel, to determine whether the four pixel areas have black pixels, and, if three pixel areas have black pixels, determines the white pixel as an edge.

7. The image forming apparatus of claim 6, wherein the edge determiner is arranged to extract preset first and second areas based on one of the extracted four pixel areas having no black pixel and, if a distance between the white pixel and each black pixel farthest away from the white pixel in the first and second areas is smaller than or equal to a threshold value, to determine the white pixel as an edge.

8. The image forming apparatus of claim 7, wherein the edge determiner is arranged to perform the edge determination by using the Equation below:

$$F = (\left| C_i - A_i \right| + \left| C_j - A_j \right| \leq D) \& \& (\left| C_i - B_i \right| + \left| C_j - B_j \right| \leq D)$$

wherein $A_i$ denotes an i axis coordinate of a black pixel (an anchor position) extracted in a first area, $A_j$ denotes a j axis coordinate of the black pixel (the anchor position) extracted in the first area, $B_i$ denotes an i axis coordinate of a black pixel (an anchor position) extracted in a second area, $B_j$ denotes a j axis coordinate of the black pixel (the anchor position) extracted in the second area, $C_i$ denotes an i axis coordinate of a white pixel, $C_j$ denotes a j axis coordinate of the white pixel, D denotes a distance threshold value between the pixel and a black pixel extracted in each area, and F is 0 or 1 (if F=1, the white pixel is determined as the edge).

**9.** An image forming method comprising:

receiving printing data;
performing halftoning with respect to the received printing data to generate binary data;
calculating an edge strength of each white pixel of the generated binary data to determine whether each white pixel is an edge candidate, determining whether the edge candidate is an edge by using a pixel value adjacent to the edge candidate, and substituting a black pixel for a white pixel determined as an edge to perform edge processing with respect to the generated binary data; and
forming an image by using the edge-processed binary data.

**10.** The image forming method of claim 9, wherein the performance of the edge-processing comprises:

detecting whether each pixel of the binary data is a white pixel;
calculating an edge strength of a detected white pixel to determine whether the detected white pixel is an edge candidate;
determining whether the determined edge candidate is an edge, based on a pixel value adjacent to the edge candidate; and
substituting a black pixel for the white pixel determined as the edge.

**11.** The image forming method of claim 10, wherein the determination of whether the detected white pixel is the edge candidate comprises: extracting a preset pixel area based on the white pixel and calculating an edge strength by using coordinate values of each black pixel and each white pixel of the extracted pixel area.

**12.** The image forming method of claim 11, wherein the edge strength is calculated by using the Equation below:

$$E = \left| \left( \sum BP_i \right) * N_w - \left( \sum WP_i \right) * N_b \right| + \left| \left( \sum BP_j \right) * N_w - \left( \sum WP_j \right) * N_b \right|$$

wherein $BP_i$ denotes a coordinate value of an i axis of a black pixel, $BP_j$ denotes a coordinate value of a j axis of the black pixel, $WP_i$ denotes a coordinate value of an i axis of a white pixel, $WP_j$ denotes a coordinate value of a j axis of the white pixel, $N_b$ denotes the number of black pixels, $N_w$ denotes the number of white pixels, and E denotes the edge strength.

**13.** The image forming method of claim 12, wherein if the calculated edge strength is greater than 0, the white pixel is determined as an edge candidate.

**14.** The image forming method of any one of claims 10 to 13, wherein four pixels areas having preset sizes are extracted in top, bottom, left, and right directions based on the white pixel, whether the four pixel areas have black pixels is determined, and, if three pixel areas have black pixels, the white pixel is determined as an edge.

**15.** The image forming method of claim 14, wherein preset first and second areas are extracted based on one of the extracted four pixel areas having no black pixel and, if a distance between the white pixel and each black pixel farthest away from the white pixel in the first and second areas is smaller than or equal to a threshold value, the white pixel is determined as an edge.

# FIG. 1

# FIG. 2

150

151       152       153       154

| PIXEL DETECTOR | → | EDGE CANDIDATE DETERMINER | → | EDGE DETERMINER | → | SUBSTITUTER |

# FIG. 3

(a)

E = 0

(b)

E = 36

# FIG. 4

# FIG. 5

| TOP-opened | BOTTOM | RIGHT | LEFT |
|---|---|---|---|

TOP-opened

| A MIN(i) MIN(j) | B MIN(i) MAX(j) |
|---|---|

501

BOTTOM

| A MAX(i) MIN(j) | B MAX(i) MAX(j) |
|---|---|

502

RIGHT

| A MIN(i) MIN(j) |
|---|
| B MAX(i) MAX(j) |

503

LEFT

| A MIN(i) MIN(j) |
|---|
| B MAX(i) MAX(j) |

504

# FIG. 6

TOP-DIR opened

610

620

# FIG. 7

LEFT-DIR opened

```
OPENED AREA ⇨   ┌─────────┐      ~710
                │    A    │
                │ MIN(i)  │
                │ MIN(j)  │▓ C i,j
                ├─────────┤
                │    B    │
                │ MIN(i)  │
                │ MAX(j)  │
                └─────────┘
```

$A_{(i,j)} = (0,4)$
$B_{(i,j)} = (8,4)$
$C_{(i,j)} = (4,4)$

$D_A : |4-0|+|4-4|=4$
$D_B : |4-8|+|4-4|=4$
SINCE $4 < = D_A \&\& 4 < = D_B$, IT IS VALID

$A_{(i,j)} = (0,2)$
$B_{(i,j)} = (8,2)$
$C_{(i,j)} = (4,4)$

$D_A : |4-0|+|4-2|=6$
$D_B : |4-8|+|4-2|=6$
SINCE $6 > = D_A \&\& 6 > = D_B$, IT IS INVALID

# FIG. 8

(a)　　　　(b)　　　　(c)

# FIG. 9

High
density

Mid
density

Low
density

# FIG. 10

lazy lazy

(a) (b)

# FIG. 11

START

| RECEIVE PRINTING DATA | ~S1110 |

| PERFORM HALFTONING WITH RESPECT TO RECEIVED PRINTING DATA TO GENERATE BINARY DATA | ~S1120 |

| EDGE-PROCESS GENERATED BINARY DATA | ~S1130 |

| FORM IMAGE | ~S1140 |

END

# FIG. 12

START

White pixel? — S1210
N

Y

CALCULATE EDGE STRENGTH — S1220

EDGE STRENGTH > 0 — S1230
N

Y

Dot position Direction — S1240
N

3-Dir

CALCULATE ANCHOR POSITIONS — S1250

Boundary Distance — S1260
N

Valid

SUBSTITUTE BLACK PIXEL FOR WHITE PIXEL — S1270

END